# EUROPÄISCHE PATENTSCHRIFT

(11) **EP 1 902 914 B1**
(45) Veröffentlichungstag und Bekanntmachung des Hinweises auf die Patenterteilung: **12.05.2010**
(21) Anmeldenummer: 07004992.9
(22) Anmeldetag: 10.03.2007
(51) Int. Cl.: B60S 1/52

(54) **Düse für eine Scheibenwaschanlage**
Nozzle for a windscreen wiper assembly
Buse pour un système de lave-glace

(30) Priorität: 08.07.2006 DE 102006031713
(43) Veröffentlichungstag der Anmeldung: 26.03.2008
(73) Patentinhaber: Vola Plast Werner Hoppach KG, 34286 Spangenberg (DE)
(72) Erfinder: Hofmann, Jürgen, 34212 Melsungen (DE); Bickel, Markus, 34326 Alt-Morschen (DE); Seyfarth, Lutz, 37287 Wehretal (DE)
(74) Vertreter: Walther, Walther & Hinz GbR

(56) Entgegenhaltungen:
- DE-A1- 10 043 721
- DE-A1- 10 242 034
- DE-A1- 19 906 197
- FR-A- 2 783 225
- JP-A- 2004 050 079
- JP-A- 2005 199 193
- US-A1- 2004 188 541

## Beschreibung

Die vorliegende Erfindung betrifft eine Düse einer Scheibenwaschanlage, umfassend einen Düsenkörper, wobei der Düsenkörper eine Düsenkammer sowie eine Zuführung für die Flüssigkeit zur Düsenkammer aufweist, wobei der Übergang von der Zuführung zu der Düsenkammer durch ein Rückschlagventil absperrbar ist, wobei die Düsenkammer einen Einsatzkörper mit einer Labyrinthführung für die Flüssigkeit aufweist.

Die Düsenkammer im Düsenkörper ist mit einer Zuführung versehen, wobei durch die Zuführung die Flüssigkeit in die Düsenkammer geführt wird. Um nun zu gewährleisten, dass auch bei Nichtbetrieb der Pumpe der Scheibenwaschanlage die Flüssigkeitssäule aufrechterhalten bleibt, ist in der Zuführung nach dem Stand der Technik ein Rückschlagventil vorgesehen. Dieses Rückschlagventil sorgt nicht nur für die Aufrechterhaltung der Wassersäule bei Nichtbetrieb der Pumpe, sondern hat auch die Aufgabe, den sogenannten 'Schwappeffekt' insbesondere bei Kurvenfahrt zu vermeiden. Insbesondere bei Kurvenfahrt ist beim Schwappeffekt zu beobachten, dass aus der Düse Flüssigkeit austritt. Solche Rückschlagventile sind relativ teuer und sie benötigen darüber hinaus verhältnismäßig viel Platz, der unmittelbar vor der Frontscheibe in oder unter der Fronthaube des Fahrzeugs nur begrenzt zur Verfügung steht.

Aus der DE 10 2004 025 476 A1 ist ein Düsenkörper für eine Reinigungsanlage eines Kraftfahrzeugs bekannt, bei der eine Zuführung vorgesehen ist, wobei auf der Zuführung der Düsenkörper angeordnet ist. Die Flüssigkeitsführung ist hierbei derart, dass die Führung der Flüssigkeit im Wesentlichen U-förmig erfolgt. Auf dem Umfang der Zuführung befindet sich eine Öffnung mit einer Membran, durch die die Flüssigkeit einer Kammer zugeführt wird, an dessen Ende V-förmig angeordnete Düsen vorgesehen sind. Es bedarf keiner näheren Erläuterung, dass diese Düse sehr voluminös baut.

Die aus der DE 199 06 197 A1 bekannte Düse ist an einem Scheibenwischer befestigt; hierbei ist eine zylindrische Membran vorgesehen, die den Fluidstrom von der Zuführung zur Düse unterbricht. Sowohl die Membran als auch die Düse sind gesonderte Bauteile, die nicht miteinander in Verbindung stehen. Insofern ist auch hier eine Miniaturisierung nicht erreichbar.

Das DE 76 13 454 U1 zeigt ein Rückschlagventil, wobei das Rückschlagventil aus zwei Gehäuseteilen besteht, zwischen denen eine sogenannte Dichtplatte angeordnet ist. Unterhalb der Dichtplatte oder Dichtung befindet sich ein mit Bohrungen versehener Boden, wobei der Boden einen Konus aufweist, der in Richtung auf die Dichtplatte zugerichtet ist. Die Funktionsweise dieses Rückschlagventils ist nun derart, dass bei anstehendem Flüssigkeitsdruck die Dichtplatte sich leicht im Bereich des Konus anhebt und den Durchgang frei gibt. Ein solches Rückschlagventil ist in der Herstellung aufwendig und damit teuer. Darüber hinaus baut ein solches Rückschlagventil relativ gesehen voluminös.

Aus der DE 100 43 721 A1 ist eine Vorrichtung zum Besprühen einer Scheibe eines Kraftfahrzeugs bekannt, wobei eine Zuführung vorgesehen ist, wobei im Bereich des Übergangs von der Zuführung zum Düsenkopf ein Rückschlagelement in Form eines federbelasteten Kugelventils vorgesehen ist. Dieses federbelastete Kugelventil befindet sich in einer gesonderten Kammer, wobei daran anschließend eine weitere Kammer vorgesehen ist, die dann schlussendlich den sogenannten Fluidic-Chip aufnimmt, der dafür sorgt, dass die zugeführte Flüssigkeit auf der Scheibenoberfläche verteilt wird. Nachteilig auch an diesem Stand der Technik ist, dass diese Düse sehr groß baut, was im Wesentlichen darin begründet ist, dass das Rückschlagventil als federbelastetes Kugelventil ausgebildet ist, und dass darüber hinaus der sogenannte Fluidic-Chip als gesondertes Bauelement in einer gesonderten Kammer untergebracht ist. Dies vergrößert allerdings nicht nur das Bauvolumen, sondern verteuert auch eine solche Düse.

Der Erfindung liegt daher die Aufgabe zu Grunde, eine Düse einer Scheibenwaschanlage der eingangs genannten Art bereitzustellen, die preiswert herstellbar ist und auch einen verhältnismäßig kleinen Bauraum benötigt.

Die Aufgabe wird bei einer Düse der eingangs genannten Art erfindungsgemäß dadurch gelöst, dass das Rückschlagelement als Membran ausgebildet ist, wobei die Membran an dem Einsatzkörper befestigt ist, wobei die Membran in einer Membrankammer angeordnet ist, wobei der Einsatzkörper im Bereich der Membran mindestens eine Durchtrittsöffnung zu der Labyrinthführung aufweist, wobei die Membran tellerförmig ausgebildet ist.

Das Rückschlagelement sorgt unmittelbar vor der Düsenkammer dafür, dass mit Abschluss der Zuführung die in der Zuführung befindliche Flüssigkeitssäule nicht absackt. Gleichzeitig wird hierdurch auch der sogenannte Schwappeffekt sicher verhindert. Die Düsenkammer weist einen Einsatzkörper mit einer Labyrinthführung für die Flüssigkeit auf. Ein solcher Einsatzkörper mit einer Labyrinthführung sorgt dafür, dass das aus der Labyrinthführung austretende Medium, meistens ein Gemisch aus Wasser mit einem Frostschutzmittel, als Strahl oszillierend den durch die Düse erfassbaren Bereich der Scheibe überstreicht. Da die oszillierende Bewegung mit hoher Geschwindigkeit erfolgt, stellt sich für den Autofahrer der austretende Flüssigkeitsstrahl fächerförmig dar. Darüber hinaus ergibt sich durch die Anordnung des Rückschlagelementes unmittelbar vor der Düsenkammer und dem Einsatzkörper der weitere Vorteil, dass die Strömung des Fluides in dem Labyrinth des Einsatzkörpers im Wesentlichen laminar bleibt. Es hat sich gezeigt, dass beim Stand der Technik die Strömung bis zum Rückschlagventil laminar ausgebildet ist. Unmittelbar nach dem Rückschlagventil wird die Strömung turbulent. Turbulent verbleibt die Strömung dann aber auch in dem Labyrinth des Einsatzkörpers. Die Folge hiervon ist, dass der Fluidstrahl nicht mehr gleichmäßig über die Scheibe geführt ist, sondern unregelmäßig, was schlussendlich zu einem unbefriedigenden Reinigungsergebnis führt. Dadurch, dass ein gesondertes Rückschlagventil entfällt, mithin die Anzahl der Bauteile verringert ist, vermindert sich zum einen der Preis einer solchen Düse und zum anderen ist der benötigte Bauraum geringer.

Weiterhin ist das Rückschlagelement als Membran ausgebildet, durch die die Zuführung absperrbar ist. Eine solche Membran, insbesondere wenn sie aus Kunststoff, z. B. Silikon, Kautschuk oder Gummi, besteht, ist leicht deformierbar. Das heißt, sie besitzt eine geringe Hysterese, woraus folgt, dass die Differenz zwischen Öffnungs- und Schließdruck gering ist. Hieraus wird deutlich, dass unmittelbar dann, wenn der Flüssigkeitsdruck in der Zuführung ansteigt, durch den Flüssigkeitsdruck die Membran verformt, d. h. von der Öffnung der Zuführung abgehoben wird und die Flüssigkeit schlussendlich in die Düsenkammer und in die Labyrinthführung des darin befindlichen Einsatzkörpers gelangen kann. Im Einzelnen ist in diesem Zusammenhang weiterhin vorgesehen, dass der Einsatzkörper im Bereich des Rückschlagelements mindestens eine Durchtrittsöffnung zu der Labyrinthführung aufweist. Diese mindestens eine Durchtrittsöffnung wird bei Verformung der Membran freigegeben, so dass hierdurch die Flüssigkeit in das Labyrinth des Einsatzkörpers gelangen kann.

Weitere vorteilhafte Merkmale der Erfindung sind den Unteransprüchen zu entnehmen.

Hierbei weist die tellerförmige Membran, die als Teller insbesondere gewölbt ausgebildet ist, einen Noppen auf, durch den die Membran klemmbar durch den Einsatzkörper erfassbar ist.

Die Funktionsweise der Düse stellt sich wie folgt dar:

Steigt der Flüssigkeitsdruck in der Zuführung an, so wird auf Grund des Flüssigkeitsdruckes die tellerförmige gewölbte Membran verformt und angehoben, was zur Folge hat, dass die Membran die Öffnung der Zuführung freigibt, so dass durch die Öffnung der Zuführung die durch die Öffnung der Zuführung austretende Flüssigkeit durch mindestens eine, vorzugsweise jedoch vier Durchtrittsöffnungen in den Einsatzkörper zu der Labyrinthführung gelangt. Unmittelbar nach Abfall des Flüssigkeitsdruckes in der Zuführung schließt die Membran die Zuführung wieder sicher ab. Die Flüssigkeitssäule bleibt aufrechterhalten, wobei darüber hinaus auch der 'Schwappeffekt' vermieden wird.

Wie bereits an anderer Stelle erläutert, ist Ziel der Entwicklung von Düsen für Scheibenwaschanlagen, insbesondere für Kraftfahrzeuge, die Düsen möglichst klein zu gestalten, damit nur wenig Bauraum benötigt wird. Bekanntermaßen werden Düsen von Scheibenwaschanlagen beheizt. Hierzu ist im Düsenkörper ein kleines Heizelement vorgesehen, das die Beheizung der Flüssigkeit örtlich begrenzt vornimmt. Insbesondere in kalten Wintern, wenn die Düsen durchgefroren sind, hat sich herausgestellt, dass eine solche Heizung nicht mehr ausreichend ist, weil sie schlussendlich nicht alle Stellen in der Düsenkammer erfasst mit der Folge, dass Eiskristalle bestehen bleiben, die den Düsenausgang in der Lage sind zu verstopfen. Insofern ist vorgesehen, dass das Heizelement, das ein Widerstandsheizglied umfasst, auf einer Wärmeverteileinrichtung angeordnet ist, wobei die Wärmeverteileinrichtung einen Großteil der Oberfläche der Düsenkammer erfasst, mithin die Wärme an beinahe jede beliebige Stelle der Düsenkammer transportiert wird, und hierdurch schlussendlich die Effektivität der Heizung gesteigert wird. Im Einzelnen ist hierbei vorgesehen, dass die Wärmeverteileinrichtung der Kontur der Düsenkammer zumindest partiell nachempfunden ist, so dass ganz offensichtlich ein großer Teil der Oberfläche der Düsenkammer beheizbar ist, mithin sichergestellt ist, dass selbst in strengen Wintern die Düse vollständig enteist werden kann. Die Wärmeverteileinrichtung stellt sich insbesondere als Metallplatte, z. B. aus Aluminium dar.

Anhand der Zeichnungen wird die Erfindung nachstehend beispielhaft näher erläutert.
- Figur 1: zeigt die Düse in einer Seitenansicht im Schnitt;
- Figur 2: zeigt den Einsatzkörper mit Membran in einer Ansicht seitlich von unten;
- Figur 3: zeigt den Einsatzkörper in einer Ansicht von oben auf das Labyrinth;
- Figur 4: zeigt den Einsatzkörper in perspektivischer Darstellung;
- Figur 5: zeigt einen Schnitt gemäß der Linie V - V aus Figur 1, wobei der Einsatzkörper weggelassen wurde.

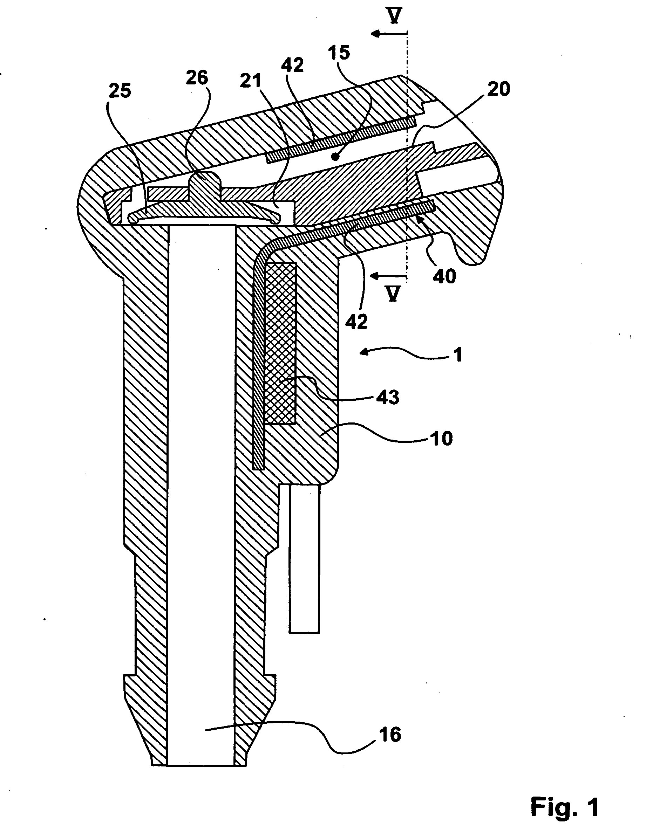

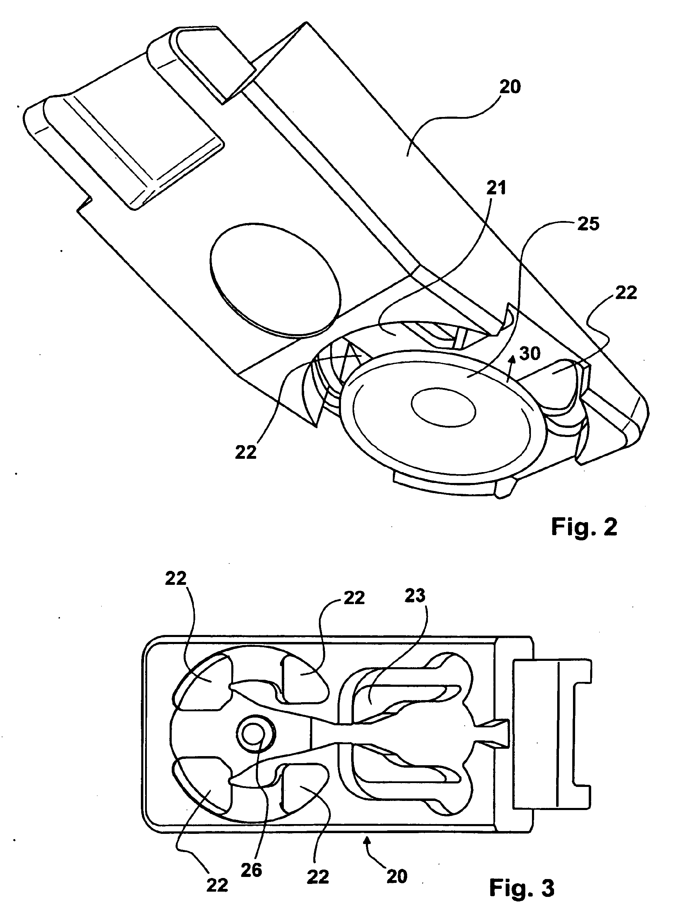

Die in Figur 1 mit 1 bezeichnete Düse umfasst den Düsenkörper 10 sowie die Düsenkammer 15, wobei der darin befindliche Einsatzkörper das Bezugszeichen 20 aufweist. Der Düsenkörper besitzt darüber hinaus eine Zuführung 16, an die endseitig ein Schlauch anschließbar ist und durch die schlussendlich die Flüssigkeit in die Düsenkammer 15 durch eine entsprechende Pumpe gefördert wird. Am oberen Ende der Zuführung 16 befindet sich die mit 25 bezeichnete Membran. Die mit 25 bezeichnete Membran ist nach Art eines gewölbten Tellers ausgebildet und dichtet die Zuführung 16 am oberen Ende ab. Der Einsatzkörper 20, an dem die Membran durch einen Noppen 26 klemmbar befestigt ist, weist um die Membran herum eine Membrankammer 21 auf. Im Bereich der Membrankammer befinden sich insgesamt 4 Durchtrittsöffnungen 22 (Figur 2, Figur 3), durch die die aus der Zuführung austretende Flüssigkeit bis in das mit 23 bezeichnete Labyrinth geführt wird.

Die Funktionsweise der Düse stellt sich nun derart dar, dass bei Ansteigen des Fluiddruckes in der Zuführung 16 die tellerförmige Membran 25 in Richtung des Pfeils 30 verformt wird, hierbei die Öffnung am Ende der Zuführung 16 freigegeben wird, die Flüssigkeit in die Membrankammer 21 strömt, von dort durch die Durchtrittsöffnungen 22 in das Labyrinth gelangt, um von dort aus in einem oszillierenden Strahl auf die Fahrzeugscheibe geführt zu werden.

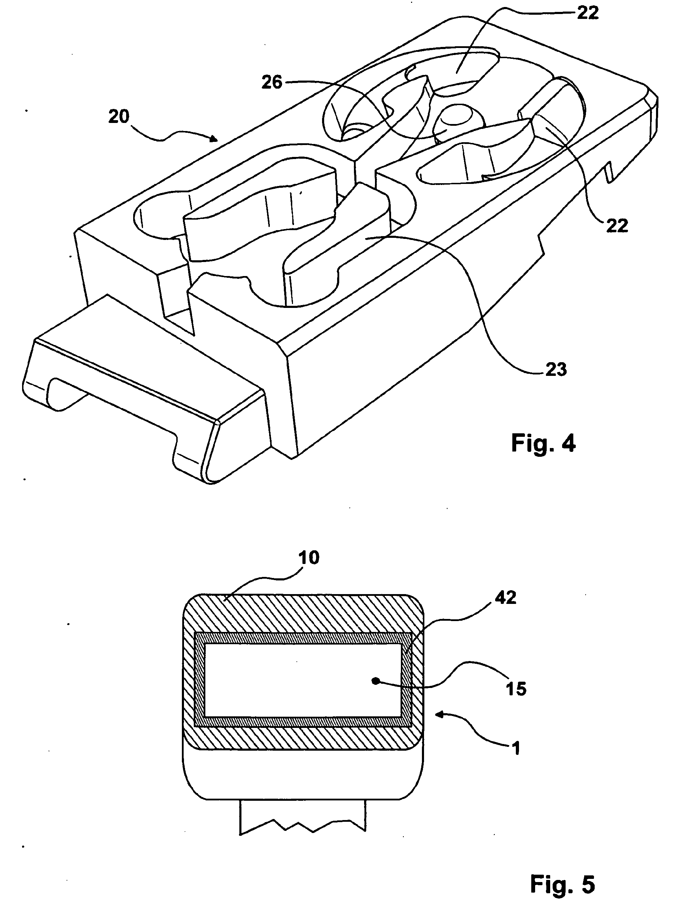

Gegenstand der Erfindung ist ebenfalls die Beheizung der Düsenkammer. Hierzu ist das Heizelement 40 vorgesehen, wobei das Heizelement 40 eine Metallplatte 42, z. B. aus Aluminium, umfasst, die die Düsenkammer 20 entsprechend der Form der Düsenkammer umgibt. Das heißt, das Heizelement bzw. die Metallplatte stellt sich hierbei als Einsatz in der Düsenkammer 20 dar. Die Metallplatte umfasst ein Widerstandsheizelement 43, das mit elektrischem Strom versorgt wird (Figur 5).

Erkennbar weist die Düse eine geringe Größe auf, trotz der Anordnung einer Rückschlagmembran in dem Düsenkörper und einem Heizelement, das die Düsenkammer im wesentlichen vollständig erfasst. Das heißt, die Düse wird den zu eingangs gestellten Prämissen an eine minimale Baugröße bei geringen Kosten durchaus gerecht.

## Patentansprüche

1. Düse (1) einer Scheibenwaschanlage, umfassend einen Düsenkörper (10), wobei der Düsenkörper (10) eine Düsenkammer (15) sowie eine Zuführung (16) für die Flüssigkeit zur Düsenkammer (15) aufweist,
wobei die Düsenkammer (15) einen Einsatzkörper (20) aufweist,
wobei an dem Einsatzkörper (20) eine als Rückschlagelement ausgebildete Membran (25) befestigt ist, wobei die Membran (25) in einer Membrankammer angeordnet ist,
**dadurch gekennzeichnet,**
**dass** die Membran (25) tellerförmig ausgebildet ist, dass die Membran (25) am Übergang von der Zuführung (16) zu der Düsenkammer (15) angeordnet ist, so dass der Übergang von der Zuführung (16) zu der Düsenkammer (15) absperrbar ist, dass der Einsatzkörper (20) eine Labyrinthführung (23) für die Flüssigkeit aufweist und dass der Einsatzkörper (20) im Bereich der Membran (25) mindestens eine Durchtrittsöffnung (22) zur Labyrinthführung (23) aufweist.

2. Düse nach Anspruch 1,
**dadurch gekennzeichnet,**
**dass** die Membran (25) durch den Einsatzkörper (20) aufnehmbar ist.

3. Düse nach Anspruch 1,
**dadurch gekennzeichnet,**
**dass** die Membran (25) gewölbt ausgebildet ist.

4. Düse nach Anspruch 1,
**dadurch gekennzeichnet,**
**dass** das die Membran (25) aus Kunststoff ausgebildet ist.

5. Düse nach Anspruch 1,
**dadurch gekennzeichnet,**
**dass** der Düsenkörper (10) ein Heizelement (40) aufweist, wobei das Heizelement (40) ein Widerstandsheizelement (43) umfasst, das auf einer Wärmeverteileinrichtung (42) angeordnet ist.

6. Düse nach Anspruch 5,
**dadurch gekennzeichnet,**
**dass** die Wärmeverteileinrichtung (42) der Kontur der Düsenkammer (20) zumindest partiell nachempfunden ist.

7. Düse nach Anspruch 5,
**dadurch gekennzeichnet,**
**dass** die Wärmeverteileinrichtung (42) als Metallplatte ausgebildet ist.

## Claims

1. A nozzle (1) of a windscreen wiper assembly, incorporating a nozzle body (10), said nozzle body (10) comprising a nozzle chamber (15) as well as a feed line (16) for feeding the liquid to said nozzle chamber (15), said nozzle chamber (15) comprising an insertion body (20), a membrane (25) configured to be a unidirectional element being fastened to said insertion body (20), said membrane (25) being disposed in a membrane chamber,
**characterized in**
**that** said membrane (25) is configured in the shape of a plate, that said membrane (25) is disposed at the transition from the feed line (16) to the nozzle chamber (15) so that the transition from the feed line (16) to the nozzle chamber (15) may be locked, that said insertion body (20) comprises a labyrinth guide (23) for the liquid and that said insertion body (20) comprises at least one passageway (22) leading to the labyrinth guide (23) in the region of said membrane (25).

2. The nozzle as set forth in claim 1,
**characterized in**
**that** the membrane (25) may be received by the insertion body (20).

3. The nozzle as set forth in claim 1,
**characterized in**
**that** the membrane (25) is configured to be arched.

4. The nozzle as set forth in claim 1,
**characterized in**
**that** the [KK1]membrane (25) is made from plastic material.

5. The nozzle as set forth in claim 1,
**characterized in**
**that** the nozzle body (10) comprises a heating element (40), said heating element (40) incorporating a resistance heating element (43) that is disposed on a heat distribution device (42).

6. The nozzle as set forth in claim 5,
**characterized in**
**that** the heat distribution device (42) is at least partially devised to conform to the contour of the nozzle chamber (20).

7. The nozzle as set forth in claim 5,
**characterized in**
**that** the heat distribution device (42) is configured to be a metal plate.

## Revendications

1. Buse (1) d'un système de lave-glace, du type comprenant un corps de buse (10), le corps de buse (10) comportant une chambre de buse (15) ainsi qu'une conduite d'alimentation (16) pour l'alimentation en liquide de la chambre de buse (15), la chambre de buse (15) comportant un insert (20), une membrane (25) conformée sous forme d'élément anti-retour étant fixée à l'insert (20), la membrane (25) étant disposée dans une chambre de membrane,
**caractérisée en ce**
**que** la membrane (25) est conformée sous forme de disque, que la membrane (25) est disposée à la transition de la conduite d'alimentation (16) vers la chambre de buse (15) de sorte que la transition de la conduite d'alimentation (16) vers la chambre de buse (15) est apte à être obturée, que l'insert (20) comporte un guide en forme de labyrinthe (23) pour le liquide et que l'insert (20) comporte au moins un passage (22) vers le guide en forme de labyrinthe (23) dans la région de la membrane (25).

2. Buse selon la revendication 1,
**caractérisée en ce**
**que** la membrane (25) peut être reçue par l'insert (20).

3. Buse selon la revendication 1,
**caractérisée en ce**
**que** la membrane (25) est bombée.

4. Buse selon la revendication 1,
**caractérisée en ce**
**que** la membrane (25) est réalisée en matière plastique.

5. Buse selon la revendication 1,
**caractérisée en ce**
**que** le corps de buse (10) comporte un élément chauffant (40), l'élément chauffant (40) comprenant un élément chauffant par résistance (43) qui est disposé sur un système de distribution de chaleur (42).

6. Buse selon la revendication 5,
**caractérisée en ce**
**que** le système de distribution de chaleur (42) imite du moins en partie les contours de la chambre de buse (20).

7. Buse selon la revendication 5,
**caractérisée en ce**
**que** le système de distribution de chaleur (42) est conformé sous forme de plaque de métal.
